# EUROPÄISCHE PATENTSCHRIFT

(11) **EP 0 344 411 B1**
(45) Veröffentlichungstag und Bekanntmachung des Hinweises auf die Patenterteilung: **05.05.1993**
(21) Anmeldenummer: 89104060.2
(22) Anmeldetag: 08.03.1989
(51) Int. Cl.: B65G 17/06

(54) **Kurvengängiger Plattenbandförderer**
Curved track plate conveyor
Transporteur à palettes pour trajet en courbes

(30) Priorität: 28.05.1988 DE 3818231
(43) Veröffentlichungstag der Anmeldung: 06.12.1989
(60) Teilanmeldung: 92113077.9
(73) Patentinhaber: REXNORD KETTE GMBH & CO. KG, D-57501 Betzdorf (DE)
(72) Erfinder: Fett, Jürgen, D-5239 Atzelgift (DE); Oelschläger, Karl Gerhard, D-5800 Hagen (DE); Bannert, Wolfgang, D-5758 Fröndenberg-Dellwig (DE)
(74) Vertreter: König, Reimar, Dr.-Ing.

(56) Entgegenhaltungen:
- DE-A- 3 046 568
- FR-A- 2 516 060

## Beschreibung

Die Erfindung betrifft einen kurvengängigen Plattenbandförderer aus mehreren, an ihren benachbarten Seitenkanten mit Scharnieraugen ineinandergreifenden und durch Scharnierbolzen miteinander verbundenen Plattengliedern, die mit Führungsschienen zusammenwirkende, bezogen auf die Förderrichtung außermittige Führungsflächen aufweisen.

Bei einem aus der US-A-3 513 964 bekannten kurvengängigen Plattenbandförderer dieser Art übernehmen unter die einzelnen Plattenglieder geschweißte, parallel zur Längsachse des Förderers verlaufende, mittels Stegen verbundene Führungsflächen das Führen des Bandförderers auf seiner kurvigen Wegstrecke. Die Führungsflächen sind dazu geneigt ausgebildet und legen sich gegen die ebenfalls geneigten, ortsfesten Führungsschienen des Plattenbandförderers an. Der Neigungswinkel ist dabei so gewählt, daß sich die Plattenglieder nicht nach oben abheben können. Bei rechtwinkligen Führungsschienen und vertikal zur Plattenebene angeordneten Führungsflächen ist es bekannt, dem Abheben des Plattenbandförderers dadurch entgegenzuwirken, daß rechtwinklig nach außen abgewinkelte Führungslappen der Führungsflächen die Schienen untergreifen.

Weiterhin ist es durch die DE-B-22 37 600 bekanntgeworden, die zum Führen an ortsfesten Gleitleisten bzw. -schienen dienenden Fuhrungsflächen eines Plattengliedes aus im wesentlichen senkrecht zum Plattenglied nach unten abgebogenen Führungsflächen herzustellen. Das Plattenglied und die Führungsflächen bestehen dabei aus einem einstückigen Blechzuschnitt, wobei die Biegekanten der Führungsflächen innerhalb der Fläche des Plattengliedes liegen. Die bekannten Plattenbandförderer besitzen jedoch den Nachteil, daß sich im Betrieb zu Bruch gehendes Transportgut, wie beispielsweise Glasbruch, zwischen den Plattengliedern festsetzen und Beschädigungen hervorrufen kann.

Des weiteren ist aus der DE-A-30 46 568 ein kurvengängiger Plattenbandförderer bekannt, bei dem die Führungsflächen durch Schweißen fest mit den Scharnieraugen verbunden sind. Dies erfordert eine aufwendige Bearbeitung der außenliegenden Scharnieraugen-Stirnflächen, um dort Richtungs- und Maßabweichungen zu beseitigen und die Stirnflächen parallel zueinander sowie zu den Führungsflächen der Schienen auszurichten. Darüber hinaus ist es bei der Montage äußerst schwierig, die verhältnismäßig kleinen Führungsflächen in die vorgesehene Lage an den Scharnieraugenaußenseiten zu bringen und dort hinreichend sicher zu verschweißen.

Diese Nachteile vermeidet eine aus der FR-A-2 516 060 bekannte, ebenfalls kurvengängige Förderkette, bei der die Führungsflächen aus nach unten abgebogenen Lappen des Plattengliedes bestehen. In den Lappen befinden sich Öffnungen für die Aufnahme der Scharnierbolzen. Diese Führungslappen unterliegen jedoch ebenfalls der Gefahr einer Beschädigung, insbesondere eines Verbiegens unter dem Einfluß von durch Glasbruch verursachten Querkräften.

Der Erfindung liegt daher die Aufgabe zugrunde, die vorerwähnten Nachteile zu vermeiden und einen Plattenbandförderer mit verbesserten Eigenschaften zu schaffen, insbesondere die Stabilität und die Robustheit der Plattenglieder sowie deren Betriebsverhalten zu verbessern.

Die Lösung dieser Aufgabe besteht darin, daß bei einem Plattenbandförderer der eingangs erwähnten Art erfindungsgemäß die Führungsflächen mit ihren Stirnkanten an den Scharnieraugen der Doppelscharnieraugen-Seitenkante des Plattengliedes anliegen, sich mithin dort lediglich abstützen, ohne mit den Scharnieraugen fest verbunden zu sein.

Damit ist nicht nur der Vorteil einer einfacheren Fertigung verbunden, sondern die Führungsflächen behalten so trotz der starken Beanspruchung im Betrieb ihre ursprüngliche Lage auch dann bei, wenn beispielsweise Glasbruch zwischen die Führungsschienen und die Führungsflächen gelangt und es dort zu erheblichen, auf die Führungsflächen wirkenden Querkräften kommt.

Die Führungsflächen sind zudem in dem von den beiden durch die Scharnieraugen der einander gegenüberliegenden Seitenkanten eines Plattengliedes verlaufenden Mittenachsen definierten Freiraum so angeordnet, daß die Entfernung bis zur vorderen Seitenkante geringer als die bis zur hinteren Seitenkante ist. Es ergibt sich somit ein großer, freier Raum bzw. eine Lücke zwischen dem an der hinteren Seitenkante mittig angeordneten Scharnierauge und den dieser Seitenkante zugewandten Stirnkanten der Führungsflächen. Auf diese Weise ist die Gefahr des Einklemmens von beispielsweise Glasbruch zwischen den Führungsflächen verringert, und außerdem tritt ein Selbstreinigungseffekt des Plattenbandförderers auf, denn unter die Plattenglieder gelangende Material-Bruchstücke können über die großen Lücken entweichen und herunterfallen.

Vorzugsweise liegen die Führungsflächen mit ihren Stirnkanten so an den Scharnieraugen der Doppelscharnieraugen-Seitenkante des Plattengliedes an, daß sie in Ausnehmungen eingreifen, die sich an den den Führungsschienen zugewandten Außenseiten der Scharnieraugen befinden. Führungsflächen, die somit derart außermittig angeordnet sind, daß sie mit ihren Stirnkanten gegen die Scharnieraugen bzw. in deren Ausnehmungen zur Anlage gelangen, können sich folglich an den Scharnieraugen abstützen. Damit läßt sich eine zusätzliche Stabilität erreichen und die Gefahr des Verformens der Führungsflächen aufgrund äußerer Einflüsse verringern. Unter der Doppelscharnieraugen-Seitenkante wird hierbei diejenige Seitenkante des Plattengliedes verstanden, an der sich die sogenannten äußeren Scharnieraugen befinden, zwischen die die Scharnieraugen der benachbarten Seitenkante eingreifen; es können an der Doppelscharnieraugen-Seitenkante gegebenenfalls auch mehr als zwei Scharnieraugen angeordnet sein.

Die Führungsflächen können sogleich aus dem Plattenglied, d.h. aus einem einstückigen Blechzuschnitt in außermittiger Lage abgebogen werden; sie lassen sich jedoch in vorteilhafter Weise an das Plattenglied anschweißen, wobei sie bevorzugt außermittig an einen Verbindungssteg angeschweißt sein können. Die Plattenglieder lassen sich auf diese Weise einfach mit vorgefertigten Führungsschuhen versehen, die nämlich aus jeweils dem Verbindungssteg und den daran bereits außermittig angeschweißten Führungsflächen bestehen.

Die außermittige Anordnung der Führungsflächen am Verbindungssteg erlaubt es, daß die Schweißpunkte des Verbindungssteges und der Führungsflächen zueinander versetzt angeordnet werden können, d.h. die den Verbindungssteg und die Führungsflächen an das Plattenglied festlegenden Schweißpunkte brauchen dann nicht auf einer geraden Verbindungslinie zu liegen. Damit läßt sich ein Verziehen des Plattengliedes beim Anschweißen der Führungsflächen vermeiden und entsprechend eine ebene Förder- bzw. Tragfläche erzielen. Außerdem stellt sich aufgrund der versetzten Schweißpunkte eine höhere Scherfestigkeit der Führung ein.

Alternativ läßt sich der Verbindungssteg zwischen zwei Schweißpunkten mit zumindest einer Kerbe versehen. In diesem Fall gleicht die sich quer über den Steg erstreckende Kerbe einen Verzug beim Erkalten des Plattengliedes aus.

Die Erfindung wird nachfolgend anhand der in der Zeichnung dargestellten Ausführungsbeispiele des näheren erläutert. Es zeigen:
- Fig. 1: eine Ansicht von unten auf zwei miteinander verbundene, erfindungsgemäß außermittig angeordnete Führungsflächen aufweisende Plattenglieder,
- Fig. 2: die in die Zeichenebene geklappten Plattenglieder gemäß Fig. 1 in der Seitenansicht,
- Fig. 3: einen Schnitt entlang der Linie III-III von Fig. 1 bei in die Zeichenebene geklappten Plattengliedern,
- Fig. 4: eine Ansicht von unten auf ein erfindungsgemäß außermittig angeordnete Führungsflächen aufweisendes Plattenglied, bei dem die Führungsflächen abweichend von der Ausführung gemäß den Fig. 1 bis 3 nach außen geneigt sind,
- Fig. 5: das in die Zeichenebene geklappte Plattenglied gemäß Fig. 4 in der Seitenansicht,
- Fig. 6: einen Schnitt entlang der Linie VI-VI von Fig.4 bei in die Zeichenebene geklappten Plattenglied,
- Fig. 7: eine der Fig. 1 entsprechende Ansicht eines Plattengliedes, das zwischen zwei Schweißpunkten des Verbindungssteges mit einer Kerbe versehen ist, und
- Fig. 8: eine der Fig. 4 entsprechende Ansicht eines Plattengliedes, das zwischen zwei Schweißpunkten des Verbindungssteges mit einer Kerbe versehen ist.

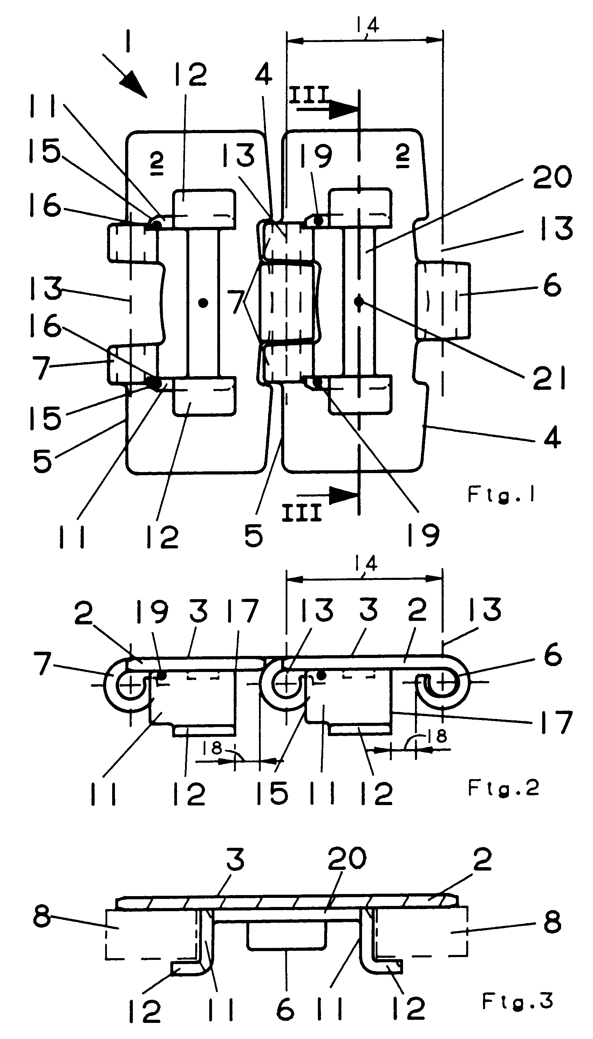

Ein kurvengängiger Plattenbandförderer 1 dient häufig zum Fördern von Flaschen und Behältern verschiedener Typen in Industrieanlagen und zum Handhaben von Nahrungsmitteln und Flüssigkeiten in Verpackungsanlagen. Der Plattenbandförderer 1 besteht aus hintereinander angeordneten Plattengliedern 2, die eine flache Tragfläche 3 (vgl. die Fig. 2 und 5) für das Transportgut bilden. Die Plattenglieder 2 bestehen aus einem flachen Mittelteil, dessen eine, hintere Seitenkante 4 ein mittiges Scharnierauge 6 und die gegenüberliegende, vordere Seitenkante 5 (Doppelscharnieraugen-Seitenkante) zwei mit Abstand voneinander angeordnete Scharnieraugen 7 aufweist. Das mittige Scharnierauge 6 greift in den Zwischenraum der Scharnieraugen 7 des benachbarten Plattengliedes ein und ist mit diesem durch einen nicht dargestellten Scharnierbolzen drehbar verbunden. Die mittigen Scharnieraugen 6 sind so ausgebildet, daß sie ein seitliches Verschwenken der einzelnen Plattenglieder 2 erlauben.

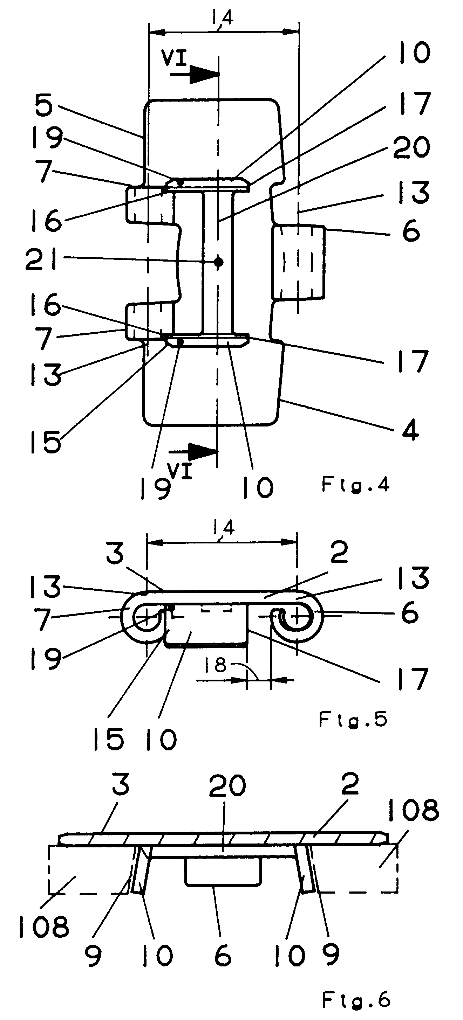

Bei derartigen kurvengängigen Plattenbandförderen 1 wird das Plattengliederband in einer ortsfesten Führungsbahn geführt, die aus zwei einander gegenüberliegenden Führungsschienen 8 (Fig. 3) bzw. 108 (Fig. 6) besteht. Während die Schienen 8 rechtwinklig sind, besitzen die Führungsschienen 108 jeweils innenliegende Schrägflächen 9, die mit korrespondierenden, ebenfalls geneigten Führungsflächen 10 des Plattengliedes 2 zusammenwirken (vgl. Fig. 6) und das Gliederband in einer horizontalen Ebene halten und in Kurven führen. Bei der Ausführung gemäß Fig. 3 mit in rechtwinkligen Schienen 8 geführten Plattengliedern 2 besitzt jedes Plattenglied sich im wesentlichen vertikal nach unten erstreckende Führungsflächen 11 mit rechtwinklig nach außen abgewinkelten, die Führungsschienen 8 untergreifenden Führungslappen 12 zur seitlichen und horizontalen Führung an den Führungsschienen 8.

Die Führungsflächen 10 bzw. 11 sind in Förderrichtung bzw. in dem von den beiden durch die Scharnieraugen 6, 7 der einander gegenüberliegenden Seitenkanten 4, 5 eines Plattengliedes 2 verlaufenden Mittenachsen 13 definierten Freiraum 14 außermittig angeordnet. Dabei sind sie derart außermittig angeordnet, daß sie sich mit ihren der vorderen Seitenkante 5 des Plattengliedes 2 zugewandten Stirnkanten 15 bis in außenliegende Ausnehmungen 16 der Scharnieraugen 7 eingreifen und sich dort abstützen. Demgegenüber enden die - gegenüberliegenden, der hinteren Seitenkante 4 des Plattengliedes zugewandten Stirnkanten 17 der Führungsflächen 10, 11 entfernt von den mittigen Scharnieraugen 6, und es entsteht ein großer Freiraum 18 jeweils zwischen den Stirnkanten 17 und der Außenfläche des nach innen eingerollten Scharnierauges 6 (vgl. Fig. 2 und Fig. 5).

Sofern die Führungsflächen 10, 11 nicht unmittelbar aus einem mit dem Plattenglied 2 einstückigen Blech hergestellt wurden, sondern - wie dargestellt - mittels Schweißpunkten 19 unten an das Plattenglied 2 angeschweißt und über einen Verbindungssteg 20 miteinander verbunden sind, lassen sich die Plattenglieder 2 mit vorgefertigten, C-förmigen Führungsschuhen versehen. Die Führungsschuhe bestehen somit jeweils aus zwei durch einen mit zumindest einem Schweißpunkt 21 an die Plattenglied-Unterseite anschweißbaren Verbindungssteg 20 miteinander verbundenen Führungsflächen 10 bzw. 11, wobei die Führungsflächen 10, 11 bereits außermittig mit dem Verbindungssteg 20 verschweißt sind.

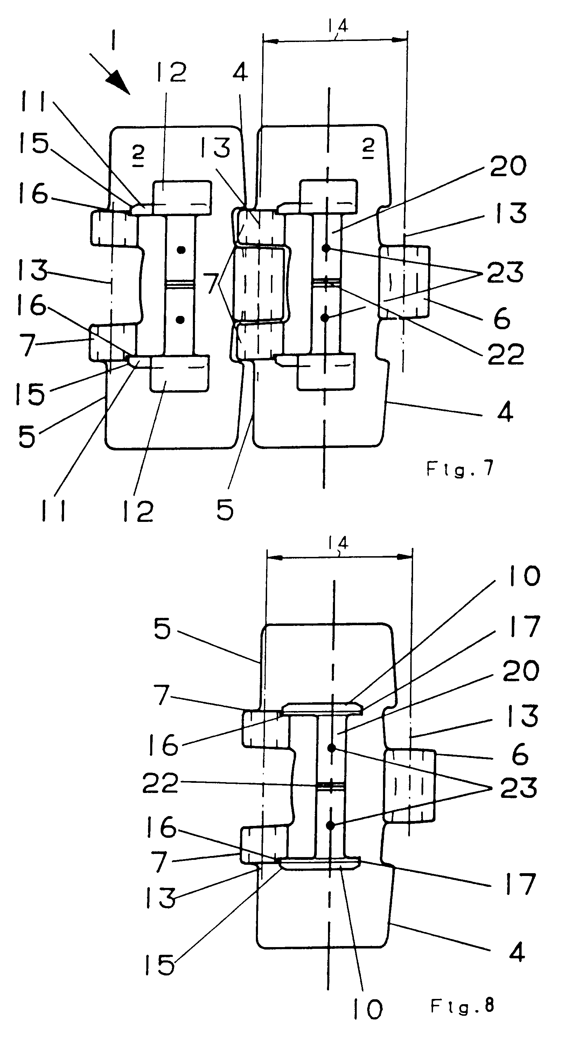

Die den Verbindungssteg 20 und die Führungsflächen 10 bzw. 11 an das Plattenglied 2 festlegenden Schweißpunkte 19, 21 sind bei den Plattengliedern 2 gemäß den Fig. 1 und 4 versetzt zueinander angeordnet, d.h. sie verlaufen nicht auf einer Linie bzw. in einer Flucht. Es liegen nämlich die die Führungsflächen 10, 11 an das Plattenglied 2 festlegenden Schweißpunkte 19 im Bereich der von Verbindungssteg 20 weiter entfernten Stirnkanten 15, während der Schweißpunkt 21 etwa in der Mitte des Verbindungssteges 20 angeordnet ist. Beim Anschweißen des Verbindungssteges 20 mit den Führungsflächen 10 bzw. 11 an das Plattenglied 2 wird aufgrund der versetzten Schweißpunkte 19, 21 ein Verzug der Tragfläche 3 verhindert. Bei der Ausführung gemäß den Fig. 7 und 8 sind die Verbindungsstege 20 der C-förmigen Führungsschuhe mit zwei Schweißpunkten 23 an das Plattenglied 2 festgeschweißt. Zwischen den beiden Schweißpunkten ist der Steg 20 mit einer Quer-Kerbe 22 versehen, die einen möglichen Schweißverzug beim Erkalten ausgleicht.

## Patentansprüche

1. Kurvengängiger Plattenbandförderer aus mehreren, an ihren benachbarten Seitenkanten mit Scharnieraugen ineinandergreifenden und durch Scharnierbolzen miteinander verbundenen Plattengliedern, die mit Führungsschienen zusammenwirkende, bezogen auf die Förderrichtung außermittige Führungsflachen aufweisen, dadurch gekennzeichnet, daß die Führungsflächen (10; 11,12) mit ihren Stirnkanten (15) an den Scharnieraugen (7) der Doppelscharnieraugen-Seitenkante (5) des Plattengliedes (2) anliegen, ohne mit diesen Verbunden zu sein.

2. Plattenbandförderer nach Anspruch 1, dadurch gekennzeichnet, daß die Stirnkanten (15) in Ausnehmungen (16) der Scharnieraugen (7) eingreifen.

3. Plattenbandförderer nach Anspruch 2, dadurch gekennzeichnet, daß die Scharnieraugen (7) an ihren den Führungsschienen (8, 108) zugewandten Außenseiten mit Ausnehmungen (16) versehen sind.

4. Plattenbandförderer nach einem oder mehreren der Ansprüche 1 bis 3, dadurch gekennzeichnet, daß die Führungsflächen (10, 11) angeschweißt sind.

5. Plattenbandförderer nach einem oder mehreren der Ansprüche 1 bis 4, dadurch gekennzeichnet, daß die Führungsflächen (10, 11) außermittig an einen Verbindungssteg (20) angeschweißt sind.

6. Plattenbandförderer nach Anspruch 5, dadurch gekennzeichnet, daß die Schweißpunkte (21 bzw. 19) des Verbindungssteges (20) und der Führungsflächen (10, 11) auf dem Plattenglied (2) zueinander versetzt sind.

7. Plattenbandförderer nach einem oder mehreren der Ansprüche 1 bis 5, dadurch gekennzeichnet, daß der Verbindungssteg (20) zwischen Schweißpunkten (23) zumindest eine Kerbe (22) aufweist.

8. Plattenbandförderer nach einem oder mehreren der Ansprüche 1 bis 7, gekennzeichnet durch geneigte Führungsflächen (10) und korrespondierende Schrägflächen (9) der Führungsschiene (108).

9. Plattenbandförderer nach einem oder mehreren der Ansprüche 1 bis 7, dadurch gekennzeichnet, daß vertikal zur Plattenebene angeordnete Führungsflächen (11) mit rechtwinklig nach außen abgewinkelten Führungslappen (12) rechteckige Führungsschienen (8) untergreifen.

## Claims

1. A curved-track apron conveyor comprising a plurality of plate members that, at their neighbouring side edges, engage with one another with hinge eyes and are connected to one another by hinge pins, and that have guiding surfaces that cooperate with guide rails and are arranged off-centre in relation to the conveying direction, characterised in that the guiding surfaces (10; 11, 12) abut with their end edges (15) against the hinge eyes (7) of the double-hinge-eye side edge (5) of the plate member (2), without being connected thereto.

2. An apron conveyor according to claim 1, characterised in that the end edges (15) engage in recesses (16) in the hinge eyes (7).

3. An apron conveyor according to claim 2, characterised in that the hinge eyes (7) are provided on their outer sides facing the guide rails (8, 108) with recesses (16).

4. An apron conveyor according to one or more of claims 1 to 3, characterised in that the guiding surfaces (10, 11) are welded on.

5. An apron conveyor according to one or more of claims 1 to 4, characterised in that the guiding surfaces (10, 11) are welded off-centre on to a connecting rib (20).

6. An apron conveyor according to claim 5, characterised in that the respective welding spots (21, 19) of the connecting rib (20) and of the guiding surfaces (10, 11) on the plate member (2) are offset to one another.

7. An apron conveyor according to one or more of claims 1 to 5, characterised in that the connecting rib (20) has at least one notch (22) between welding spots (23),

8. An apron conveyor according to one or more of claims 1 to 7, characterised by inclined guiding surfaces (10) and corresponding sloping surfaces (9) of the guide rails (108).

9. An apron conveyor according to one or more of claims 1 to 7, characterised in that guiding surfaces (11) arranged vertical to the plane of the plates engage under rectangular guide rails with guide tongues (12) bent outwards at right angles.

## Revendications

1. Transporteur à palettes à trajet courbe, constitué par plusieurs éléments de palette qui s'engagent l'un dans l'autre, aux arêtes latérales adjacentes par des oeillères d'articulation et des axes d'articulation et qui comportent des surfaces de guidage qui sont décentrées par rapport à la direction de déplacement, qui agissent en association avec des rails de guidage,
caractérisé en ce que les surfaces de guidage (10, 11, 12) viennent buter, par l'intermédiaire de leurs arêtes frontales (15), contre les oeillères d'articulation (7) de l'arête latérale (5) de l'élément de palette (2), comportant des oeillères d'articulation doubles, sans être reliées à celles-ci (7).

2. Transporteur à palettes selon la revendication 1
caractérisé en ce que les arêtes frontales (15) s'engagent dans des évidements (16) des oeillères d'articulation (7).

3. Transporteur à palettes selon la revendication 1
caractérisé en ce que les oeillères d'articulation (7) sont munies d'évidements (16) pratiqués dans les faces extérieures orientées vers les rails de guidage (18, 108).

4. Transporteur à palettes selon l'une ou plusieurs des revendications 1 à 3,
caractérisé en ce que les surfaces de guidage (10, 11) sont fixées par soudage.

5. Transporteur à palettes selon l'une ou plusieurs des revendications 1 à 4,
caractérisé en ce que les surfaces de guidage (10, 11) sont soudées de façon décentrée à une entretoise (20).

6. Transporteur à palettes selon la revendication 5
caractérisé en ce que les points de soudure (respectivement 21 ou 19) de l'entretoise (20) et des surfaces de guidage (10, 11) sur l'élément de palette (2) sont décalés les uns par rapport aux autres.

7. Transporteur à palettes selon l'une ou plusieurs des revendications 1 à 5,
caractérisé en ce que l'entretoise (20) présente au moins une encoche (22) entre les points de soudure (23).

8. Transporteur à palettes selon l'une ou plusieurs des revendications 1 à 7,
caractérisé par des surfaces de guidage inclinées (10) et des surfaces inclinées correspondantes (9) du rail de guidage (108).

9. Transporteur à palettes selon l'une ou plusieurs des revendications 1 à 8,
caractérisé en ce que des surfaces de guidage (11) agencées perpendiculairement par rapport au plan de palette viennent s'engager en dessous de rails de guidage rectangulaires (8) moyennant des pattes de guidage (12) pliées à angle droit vers l'extérieur.
